# EUROPÄISCHE PATENTSCHRIFT

(11) **EP 3 012 518 B1**
(45) Veröffentlichungstag und Bekanntmachung des Hinweises auf die Patenterteilung: **13.12.2017**
(21) Anmeldenummer: 15189915.0
(22) Anmeldetag: 15.10.2015
(51) Int. Cl.: F21K 99/00, F21S 2/00, F21V 19/00, H01R 33/00, H05B 33/08

(54) **STABLAMPE UND LEUCHTE MIT DER STABLAMPE**
TUBULAR LAMP AND LIGHTING DEVICE USING THE SAME
LAMPE TUBULAIRE ET LUMINAIRE MUNI D'UNE TELLE LAMPE

(30) Priorität: 21.10.2014 DE 102014221361
(43) Veröffentlichungstag der Anmeldung: 27.04.2016
(73) Patentinhaber: RIDI Leuchten GmbH, 72417 Jungingen (DE)
(72) Erfinder: Lebherz, Andreas, 72336 Balingen BW Baden-Württemberg (DE); Mania, Dirk, 72379 Hechingen-Stetten BW Baden-Württemberg (DE)
(74) Vertreter: BRP Renaud & Partner mbB Rechtsanwälte Patentanwälte Steuerberater

(56) Entgegenhaltungen:
- EP-A1- 2 385 746
- EP-A2- 2 784 381
- WO-A1-2013/176000
- WO-A1-2014/006805
- CN-U- 203 176 791
- DE-A1-102011 103 907
- JP-B1- 4 266 242
- US-A1- 2013 127 338
- US-A1- 2013 141 890

## Beschreibung

Die vorliegende Erfindung betrifft eine Stablampe zum austauschbaren Einsetzen in eine Leuchte gemäß dem Oberbegriff des Anspruchs 1. Die Erfindung betrifft außerdem eine mit einer derartigen Stablampe ausgestattete Leuchte.

Im vorliegenden Zusammenhang wird der Begriff "Stablampe" als stabförmige Lampe verstanden, wobei die Stablampe bevorzugt geradlinig und länglich ausgestaltet ist. Grundsätzlich sind jedoch auch gekrümmte, insbesondere kreisbogenförmig oder kreisförmig gekrümmte, Stablampen denkbar. Typische Stablampen sind als Leuchtstoffröhren ausgestaltet, bei denen ein in der Regel gasförmiger Leuchtstoff zum Leuchten angeregt wird. Moderne Stablampen können als LED-Lampen ausgestaltet sein, die als Leuchtelemente eine Vielzahl von LEDs aufweisen, wobei LED für Licht emittierende Diode steht.

Eine Leuchte, in die wenigstens eine derartige Stablampe einsetzbar ist, umfasst zweckmäßig ein Steuergerät zum Betreiben der jeweils eingesetzten Stablampe. Moderne Leuchten können dabei zum Einsetzen unterschiedlicher Stablampen ausgestaltet sein, wobei sich die unterschiedlichen Stablampen durch einen unterschiedlichen Strombedarf und/oder Spannungsbedarf voneinander unterscheiden können. Damit das jeweilige Steuergerät für die jeweils eingesetzte Stablampe eine passende Stromversorgung ermöglicht, kann ein einstellbares Steuergerät verwendet werden, an dem der Anwender beim Austauschen einer Stablampe die für die neu eingesetzte Stablampe passende Stromversorgung am Steuergerät manuell einstellen kann.

Problematisch dabei ist, dass der Anwender beim Einsetzen einer Stablampe, die eine andere Stromversorgung benötigt, daran denken muss, dass Steuergerät entsprechend zu betätigen. Andernfalls kann dies leicht zu einer Beschädigung der Stablampe bzw. des Steuergeräts führen.

Eine gattungsgemäße Stablampe ist aus der EP 2 784 381 bekannt. Sie besitzt einen stabförmigen Lampenkörper, der wenigstens ein Leuchtmittel aufweist, wobei die Stablampe an dem einen Ende des Lampenkörpers einen Stromanschlusssockel zur Stromversorgung des jeweiligen Leuchtmittels aufweist, der komplementär zu einer leuchtenseitigen Stromanschlussfassung ausgestaltet ist, und wobei die Stablampe an dem anderen Ende des Lampenkörpers einen Codierungssockel aufweist, der komplementär zu einer leuchtenseitigen Codierungsfassung ausgestaltet ist und der bei in die Leuchte eingesetzter Stablampe mit der Codierungsfassung zum Erzeugen und/oder Übertragen des Codierungssignals zusammenwirkt. Des Weiteren ist ein Codierungselement in Form einer Helligkeitssteuereinrichtung vorgesehen, wobei dieses Codierungselement mit elektrischen Sockelkontakten des Codierungssockels elektrisch verbunden ist, die bei in die Leuchte eingesetzter Stablampe elektrisch mit elektrischen Fassungskontakten der Codierungsfassung verbunden sind, wobei das Codierungselement das erzeugbare und/oder übertragbare Codierungssignal bestimmt. Bei der bekannten Stablampe ist die Helligkeitssteuereinrichtung in Form eines separaten Bauteils zwischen dem Lampenkörper und dem Codierungssockel in die Stablampe eingebaut.

Die EP 2 385 746 A1 offenbart eine ähnliche Stablampe, bei der ein Codierungselement auf derselben Platine angeordnet ist, auf der sich auch die als LEDs ausgestalteten Leuchtmittel befinden. Insoweit ist hier das Codierungselement in den Lampenkörper integriert.

Aus der WO 2013/176000 A1 ist eine weitere Stablampe bekannt, bei der elektronische Bauteile in den Lampenkörper stirnseitig eingesetzt und vom jeweiligen Sockel umschlossen sind.

Die vorliegende Erfindung beschäftigt sich mit dem Problem, für eine Leuchte bzw. für eine Stablampe eine verbesserte Ausführungsform anzugeben, die bei einem Lampenwechsel, der eine Anpassung der Stromversorgung am Steuergerät erfordert, die Gefahr reduziert, dass die jeweils eingesetzte Stablampe mit einer unpassenden Stromversorgung betrieben wird.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, in die Stablampe selbst eine Codierung zu integrieren und die Leuchte mit einer Codierungserkennung auszustatten, die mit dem Steuergerät zusammenwirkt, sodass beim Einsetzen einer Stablampe in die Leuchte automatisch über die Codierung der Stablampe am Steuergerät eine Auswahl der passenden Stromversorgung ausgelöst wird. Auf diese Weise kann auf eine Interaktion mit einem Anwender, der die Stablampe austauscht, verzichtet werden, wodurch diese Fehlerquelle ausgeschaltet ist. Die Vorteile liegen auf der Hand. Eine erfindungsgemäße Stablampe ist somit mit einer Codierung ausgestattet, die, wenn die Stablampe in die Leuchte eingesetzt ist, mit der Codierungserkennung der Leuchte zusammenwirkt. Die Codierungserkennung identifiziert bzw. erkennt die Codierung der Stablampe und kann abhängig davon das Steuergerät so ansteuern, dass es die jeweilige Stablampe mit der passenden Stromversorgung betreibt. Hierzu kann das Steuergerät so ausgestaltet sein, dass es für die jeweilige Stablampe eine passende Spannung und/oder einen passenden Strom bereitstellt. Die zugehörige Leuchte umfasst somit eine derartige Codierungserkennung sowie ein damit gekoppeltes Steuergerät, das eine variable Stromversorgung ermöglicht und insbesondere hinsichtlich des Stroms und/oder der Spannung einstellbar ist, mit dem bzw. mit der die jeweilige Stablampe betrieben werden soll. Diese Codierungserkennung kann dabei zumindest teilweise in das Steuergerät softwaremäßig implementiert und/oder hardwaremäßig integriert sein.

Erfindungsgemäß umfasst die Stablampe einen stabförmigen Lampenkörper, der wenigstens ein Leuchtmittel aufweist, einen Stromanschlusssockel, der an dem einen Längsende des Lampenkörpers angeordnet ist und zur Stromversorgung des jeweiligen Leuchtmittels dient, sowie einen Codierungssockel, der an dem anderen Längsende des Lampenkörpers angeordnet ist und der zum Erzeugen und/oder Übertragen eines mit der Stablampe korrelierenden elektrisch codierten Signals dient. Mit anderen Worten, die Codierung der Stablampe ist in den Codierungssockel integriert. Hierdurch ergibt sich ein besonders einfacher Aufbau für die Stablampe. Insbesondere lässt sich die codierte Stablampe auf diese Weise vergleichsweise preiswert herstellen.

Eine erfindungsgemäße Leuchte, in die eine derartige, codierte Stablampe eingesetzt ist, umfasst ein Steuergerät zum Betreiben der jeweils eingesetzten Stablampe, wobei das Steuergerät so ausgestaltet ist, dass eine Stromversorgung zum Betreiben der jeweiligen Stablampe hinsichtlich Strom und/oder Spannung einstellbar ist. Die Leuchte ist außerdem mit einer Codierungserkennung ausgestattet, die mit dem Steuergerät gekoppelt ist oder wenigstens teilweise darin integriert ist. Ferner ist die Leuchte so ausgestaltet, dass die in die Leuchte eingesetzte Stablampe mit der Codierungserkennung zusammenwirkt, derart, dass ein Codierungssignal, das mit der von der Stablampe benötigten Stromversorgung, insbesondere mit der von der Stablampe benötigten Spannung und/oder mit dem von der Stablampe benötigten Strom, korreliert, dem Steuergerät zugeführt wird, derart, dass das Steuergerät abhängig von diesem Codierungssignal die benötigte Stromversorgung bereitstellt und bei eingeschalteter Leuchte die jeweilige Stablampe mit der ausgewählten bzw. eingestellten und somit für die jeweilige Stablampe passenden Stromversorgung betreibt.

Entsprechend einer vorteilhaften Ausführungsform besitzt die Leuchte für jede darin einsetzbare Stablampe zwei voneinander beabstandete Fassungen zum Halten der eingesetzten Stablampe. Die eine Fassung ist dabei als Stromanschlussfassung ausgestaltet, die mit dem Steuergerät elektrisch verbunden ist und zur Stromversorgung der eingesetzten Stablampe dient. Die andere Fassung ist dagegen als Codierungsfassung ausgestaltet, die mit dem Steuergerät elektrisch verbunden ist und zum Erzeugen und/oder Übertragen eines mit der eingesetzten Stablampe korrelierten Codierungssignals an das Steuergerät dient. Das Steuergerät ist nun so ausgestaltet und/oder programmiert, dass es zum Betreiben der jeweiligen Stablampe abhängig vom Codierungssignal eine hinsichtlich Strom und/oder Spannung an die jeweilige Stablampe angepasste Stromversorgung auswählt und, wenn die Leuchte eingeschaltet wird bzw. ist, durchführt. Bei dieser Ausführungsform ist die Codierungserkennung durch die jeweilige Codierungsfassung und durch einen Bestandteil des Steuergeräts gebildet. Beispielsweise kann das Steuergerät zu diesem Zweck eine mit der jeweiligen Codierungsfassung gekoppelte Auswerteeinheit enthalten, die das Codierungssignal auswertet und in dessen Abhängigkeit eine mit der jeweiligen Stromanschlussfassung gekoppelte Leistungselektronik des Steuergeräts ansteuert.

Erfindungsgemäß weist der Codierungssockel wenigstens ein Codierungselement auf, das mit elektrischen Sockelkontakten des Codierungssockels elektrisch verbunden ist, die bei in die Leuchte eingesetzter Stablampe elektrisch mit elektrischen Fassungskontakten der Codierungsfassung verbunden sind, wobei das Codierungselement, das erzeugbare und/oder übertragbare Codierungssignal bestimmt. Beim Codierungselement kann es sich dabei um ein elektrisches und/oder elektronisches Bauteil handeln, wodurch einerseits die Erzeugung eines elektrischen Codierungssignals vereinfacht ist, während andererseits eine hohe Zuverlässigkeit realisierbar ist. Insbesondere kann es sich beim Codierungselement um einen ohmschen Widerstand handeln.

Gemäß einer anderen vorteilhaften Ausführungsform der Stablampe kann vorgesehen sein, dass bei in die Leuchte eingesetzter Stablampe die Fassungskontakte der Codierungsfassung über die Sockelkontakte des Codierungssockels durch das Codierungselement hindurch elektrisch miteinander verbunden sind. Mit anderen Worten, die Fassungskontakte der Codierungsfassung sind bei nicht eingesetzter Stablampe nicht miteinander elektrisch verbunden, sodass zu den Fassungskontakten führende Leitungen ebenfalls nicht miteinander elektrisch verbunden sind. Erst wenn die Stablampe in die Leuchte eingesetzt ist und der Codierungssockel in die Codierungsfassung eingesetzt ist, erfolgt eine elektrische Kontaktierung der Fassungskontakte durch den Codierungssockel hindurch und somit auch durch das jeweilige Codierungselement hindurch. Auf diese Weise sind die zu den Fassungskontakten führenden elektrischen Leitungen miteinander verbunden, sodass durch diese Leitungen ein elektrischer Strom fließen kann bzw. ein elektrisches Potential abgreifbar ist. Durch die Art des Codierungselements lässt sich dabei der Strom bzw. die Spannung beeinflussen, was die gewünschte Codierung für die jeweilige Stablampe ermöglicht. Beispielsweise lassen sich zum Erzeugen verschiedener Codierungssignale Widerstände mit entsprechend unterschiedlichen Widerstandswerten verwenden. Die unterschiedlichen Spannungen bzw. Ströme repräsentieren dabei individuelle Codierungssignale, die vom Steuergerät entsprechend ausgewertet werden können. Beispielsweise kann an die zu den Fassungskontakten führenden Leitungen eine vorbestimmte elektrische Spannung angelegt werden. Abhängig vom ohmschen Widerstand, der das Codierungselement bildet, lässt sich bei eingesetzter Stablampe ein variierender Strom ermitteln, wobei der durch die genannten Leitungen fließende elektrische Strom vom Widerstand, also vom Codierungselement abhängt, sodass die Stromstärke in diesem Fall als Codierungssignal genutzt werden kann.

Bei einer vorteilhaften Ausführungsform der Stablampe können der Anschlusssockel und der Codierungssockel mechanisch verwechslungssicher ausgestaltet sein, sodass der Anschlusssockel nur in die jeweilige Anschlussfassung passt.

Auf diese Weise wird sichergestellt, dass die Stablampe nur so in die Leuchte eingebaut werden kann, dass nach dem Einbau der Anschlusssockel mit der Anschlussfassung verbunden ist und der Codierungssockel mit der Codierungsfassung verbunden ist.

Bei einer anderen Ausführungsform der Stablampe kann die Stablampe als stabförmige LED-Lampe ausgestaltet sein, die mehrere LEDs als Leuchtmittel aufweist. Gerade bei derartigen LED-Lampen kann die Stromversorgung hinsichtlich der benötigten Spannung bzw. hinsichtlich des erforderlichen Stroms stark variieren, je nach Art der verwendeten LEDs und je nach Anzahl der verwendeten LEDs. Somit eignet sich die hier vorgestellte Erfindung in besonderer Weise für die Verwendung von LED-Lampen.

Gemäß einer vorteilhaften Ausführungsform der Leuchte kann das Steuergerät eine Codierungsleitung aufweisen, die zumindest einen ersten Leiter und mindestens einen zweiten Leiter aufweist. Die jeweilige Codierungsfassung besitzt dabei einen mit dem ersten Leiter der Codierungsleitung elektrisch verbundenen ersten Fassungskontakt und einem mit dem zweiten Leiter der Codierungsleitung elektrisch verbundenen zweiten Fassungskontakt. Die Fassungskontakte werden erst bei eingesetzter Stablampe durch den Codierungssockel elektrisch miteinander verbunden. Somit ist die Codierungsleitung bei fehlender Stablampe offen und erst bei eingesetzter Stablampe geschlossen. Somit erfolgt eine Signalübertragung erst dann, wenn die Stablampe in die Leuchte eingesetzt ist. Da außerdem die Codierung in den Codierungssockel integriert ist, erfolgt bei eingesetzter Stablampe zwangsläufig die Übertragung eines codierten Signals, also des Codierungssignals.

Gemäß einer anderen vorteilhaften Ausführungsform der Leuchte können die jeweilige Stromanschlussfassung und die jeweilige Codierungsfassung mechanisch verwechslungssicher ausgestaltet sein, sodass nur ein passender Stromanschlusssockel in die Stromanschlussfassung passt. Auf diese Weise wird vermieden, dass die Stablampe falsch herum in die Leuchte eingesetzt wird. Ferner kann dadurch vermieden werden, dass nicht für diese Leuchte geeignete Stablampen zum Einsatz kommen. Insbesondere können keine nicht codierten Stablampen eingesetzt werden.

Gemäß einer anderen vorteilhaften Ausführungsform der Leuchte kann diese zum Einsetzen von wenigstens zwei Stablampen vorgesehen sein. Bei einer einfachen Ausführungsform müssen die wenigstens zwei Stablampen hinsichtlich ihrer Stromversorgung identisch sein, wodurch das Steuergerät einen vergleichsweise einfachen Aufbau besitzt; beispielsweise ist für die wenigstens zwei Stablampen ein gemeinsamer Treiber vorgesehen, der die wenigstens zwei Stablampen dann gemeinsam mit der erforderlichen Spannung bzw. mit dem erforderlichen Strom versorgt. Bei einer besonderen Ausführungsform können dagegen die wenigstens zwei Stablampen hinsichtlich ihrer Stromversorgung unterschiedlich sein. Das Steuergerät der Leuchte ist dann so ausgestaltet bzw. programmiert, dass es die wenigstens zwei Stablampen individuell mit der jeweils passenden Stromversorgung betreiben kann. Insbesondere weist das Steuergerät in diesem Fall für jede Stablampe einen separaten Treiber auf, um die separate und individuelle Stromversorgung zu ermöglichen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung eines Leuchtensets,
- Fig. 2: eine vergrößerte Ansicht eines Details II aus Figur 1,
- Fig. 3: eine isometrische Ansicht eines Codierungssockels von innen,
- Fig. 4: eine isometrische Ansicht des Codierungssockels von außen,
- Fig. 5: eine isometrische Ansicht eines Anschlusssockels von außen.

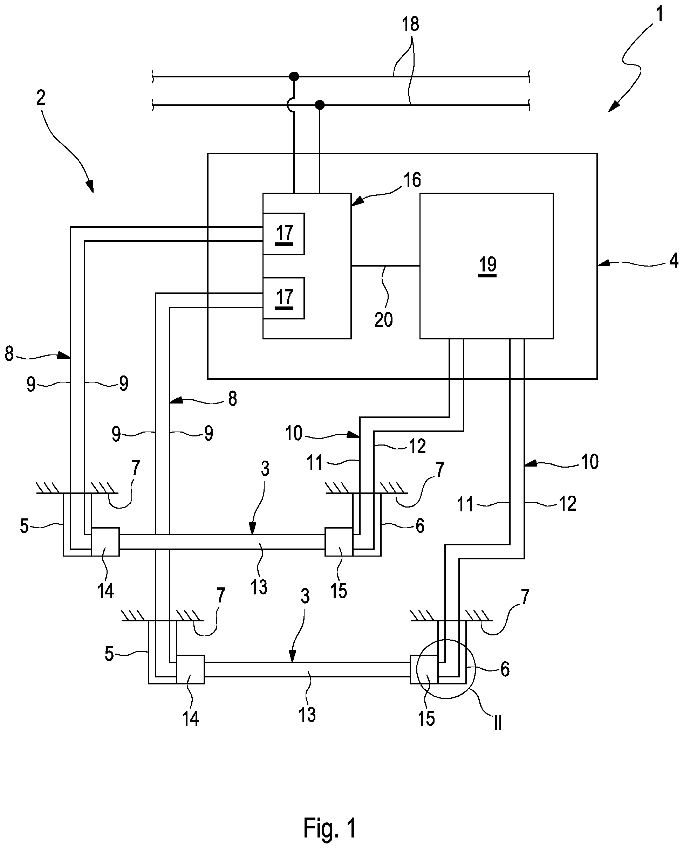

Entsprechend Figur 1 umfasst ein Leuchtenset 1 eine Leuchte 2 und wenigstens eine Stablampe 3. Im Beispiel der Figur 1 ist die Leuchte 2 zur gleichzeitigen Verwendung von zwei Stablampen 3 ausgestaltet, sodass das Leuchtenset 1 in diesem Fall eine Leuchte 2 und zwei Stablampen 3 umfasst.

Die Leuchte 2 umfasst ein Steuergerät 4, das zum Betreiben der jeweils eingesetzten Stablampe 3 dient. Das bedeutet, dass das Steuergerät 4 im Betrieb der Leuchte 2 die jeweilige Stablampe 3 mit der erforderlichen elektrischen Spannung und mit dem erforderlichen elektrischen Strom versorgt. Die Leuchte 2 umfasst außerdem für jede darin einsetzbare Stablampe 3 jeweils zwei voneinander beabstandete Fassungen 5, 6, die zum Halten der jeweils eingesetzten Stablampe 3 an bzw. in einem hier nur kursorisch dargestellten Leuchtengehäuse 7 dienen. In besagtem Leuchtengehäuse 7 ist zweckmäßig auch das Steuergerät 4 untergebracht.

Die eine Fassung 5 ist als Stromanschlussfassung ausgestaltet, die im Folgenden ebenfalls mit 5 bezeichnet wird. Die jeweilige Stromanschlussfassung 5 ist jeweils über eine Stromleitung 8 elektrisch mit dem Steuergerät 4 verbunden und dient zur Stromversorgung der jeweils eingesetzten Stablampe 3. Die Stromleitung 8 umfasst dabei in üblicher Weise zumindest zwei elektrische Leiter 9. Die jeweils andere Fassung 6 ist als Codierungsfassung ausgestaltet, die im Folgenden ebenfalls mit 6 bezeichnet wird. Die jeweilige Codierungsfassung 6 ist dabei über eine Codierungsleitung 10 elektrisch mit dem Steuergerät 4 verbunden und dient zum Erzeugen und/oder zum Übertragen bzw. zum Weiterleiten eines mit der eingesetzten Stablampe 3 korrelierten Codierungssignals an das Steuergerät 4. Die jeweilige Codierungsleitung 10 umfasst hierbei jeweils zwei elektrische Leiter, nämlich einen ersten Leiter 11 und einen zweiten Leiter 12.

Das Steuergerät 4 ist nun so ausgestaltet bzw. programmiert, dass es zum Betreiben der jeweiligen Stablampe 3 eine Stromversorgung für die jeweilige Stablampe 3 hinsichtlich Strom und/oder Spannung abhängig vom zuvor genannten Codierungssignal auswählt, sodass die jeweilige Stablampe 3 jeweils mit einer daran angepassten Stromversorgung betrieben werden kann.

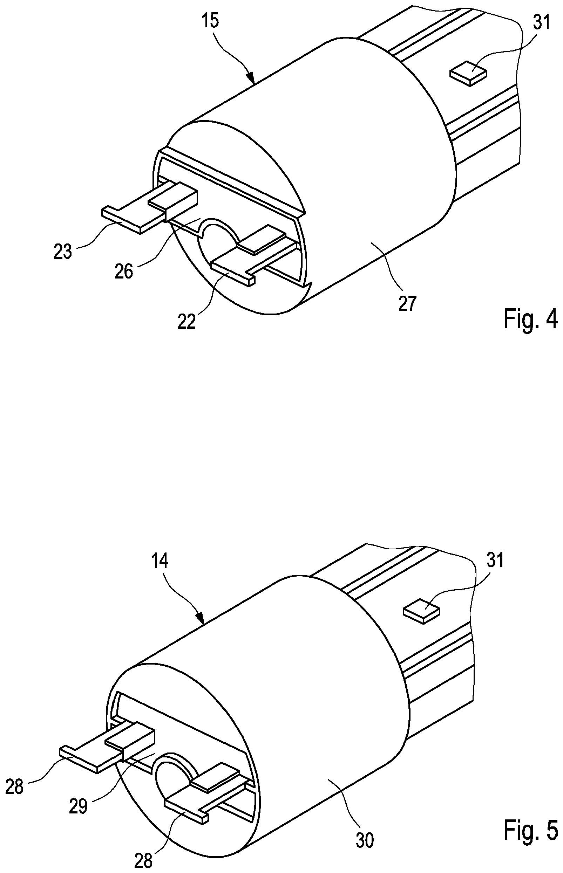

Die jeweilige Stablampe 3 besitzt einen stabförmigen Lampenkörper 13, der zumindest ein Leuchtmittel aufweist. Bevorzugt ist dabei eine Ausführungsform, bei welcher die Stablampe 3 als stabförmige LED-Lampe ausgestaltet ist, die gemäß den Figuren 4 und 5 mehrere LEDs 31 als Leuchtmittel aufweist. Die Stablampen 3 sind im gezeigten Beispiel jeweils mit einem geradlinigen und länglichen Lampenkörper 13 versehen. Grundsätzlich kann die jeweilige Stablampe 3 auch einen gebogenen Lampenkörper 13 aufweisen. Jedenfalls ist die jeweilige Stablampe 3 an dem einen Längsende und an dem anderen Längsende jeweils mit einem Sockel 14, 15 ausgestattet, die mit den Fassungen 5, 6 zum Halten der Stablampe 3 am oder im Leuchtengehäuse 7 zusammenwirken. Der eine Sockel 14 ist dabei als Stromanschlusssockel ausgestaltet, der im Folgenden ebenfalls mit 14 bezeichnet wird. Der Stromanschlusssockel 14 dient zur Stromversorgung des jeweiligen Leuchtmittels bzw. der Stablampe 3 und ist komplementär zur Stromanschlussfassung 5 ausgestaltet. Der andere Sockel 15 ist dagegen als Codierungssockel ausgestaltet, der im Folgenden ebenfalls mit 15 bezeichnet wird. Der Codierungssockel 15 ist komplementär zum Codierungsanschluss 6 ausgestaltet. Ferner wirkt der Codierungssockel 15 bei in die Leuchte 2 eingesetzter Stablampe 3 mit der zugehörigen Codierungsfassung 6 zum Erzeugen und Übertragen bzw. Weiterleiten des Codierungssignals zusammen. Insoweit bildet der Codierungssockel 15 im Allgemeinen eine Codierung der jeweiligen Stablampe 3.

Das Steuergerät 4 enthält gemäß Figur 1 beispielsweise eine Leistungselektronik 16, die für jedes Fassungspaar 5, 6 jeweils einen Treiber 17 aufweist, an den die jeweilige Stromleitung 8 angeschlossen ist. Bei einer einfacheren Ausführungsform ist dagegen nur ein einziger, gemeinsamer Treiber 17 für beide Stablampen 3 vorgesehen. Die Leistungselektronik 16 ist ihrerseits an eine externe Stromversorgung 18 angeschlossen, die beispielsweise durch ein gebäudeseitiges Stromnetz gebildet sein kann. Das Steuergerät 4 umfasst außerdem eine Auswerteeinrichtung 19, die einerseits über die Codierungsleitungen 10 elektrisch mit den Codierungsfassungen 6 verbunden ist und die andererseits über eine Steuerleitung 20 mit der Leistungselektronik 16 elektrisch verbunden ist. Die Auswerteeinrichtung 19 kann die eingehenden Codierungssignale auswerten und abhängig davon die Leistungselektronik 16 ansteuern. Die Leistungselektronik 16 kann dann die Treiber 17 individuell so ansteuern, dass eine individuelle Stromversorgung der Stablampen 3 hinsichtlich Spannung und/oder Strom erfolgt. Bei der vorstehend genannten einfacheren Ausführungsform, die mit einem gemeinsamen Treiber 17 auskommt, kann die Auswerteeinrichtung 19 so ausgestaltet bzw. programmiert sein, dass sie über die Codierung überwacht, ob die eingesetzten Stablampen 3 hinsichtlich der benötigten Stromversorgung gleich codiert sind. Falls ja, kann der Treiber 17 zum Generieren der erforderlichen Stromversorgung angesteuert werden. Falls nicht, kann der Treiber 17 zum Erzeugen einer für beide Stablampen 3 unschädlichen Stromversorgung angesteuert werden, um quasi eine Notbeleuchtung zu ermöglichen, und/oder zum Erzeugen eines Warnsignals angesteuert werden, das dem Anwender signalisiert, dass die eingesetzten Stablampen 3 ungleich sind bzw. unterschiedliche Stromversorgungen benötigen.

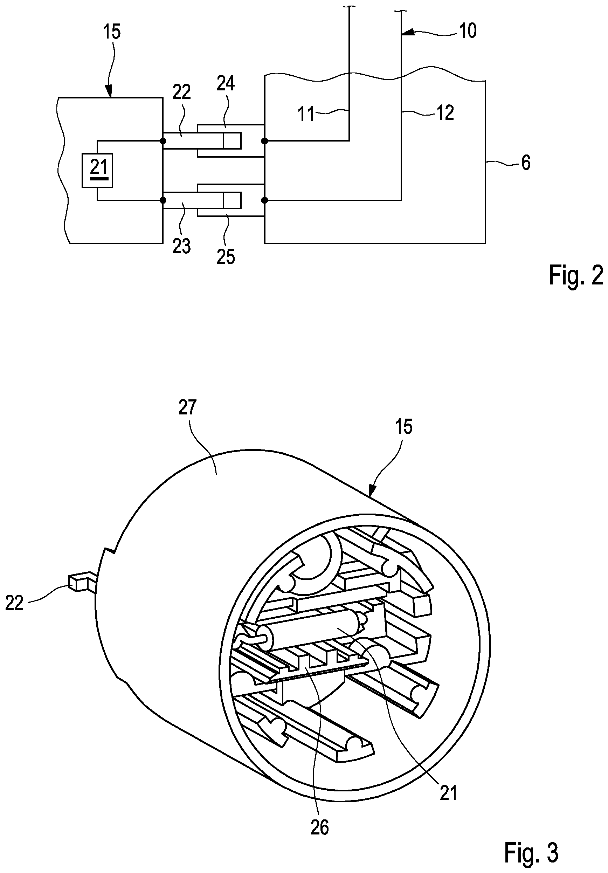

Gemäß Figur 2 kann der jeweilige Codierungssockel 15 zumindest ein Codierungselement 21 aufweisen, sowie zwei elektrische Sockelkontakte 22, 23 besitzen, die elektrisch mit dem Codierungselement 21 verbunden sind. Die zugehörige Codierungsfassung 6 weist zu den Sockelkontakten 22, 23 komplementäre Fassungskontakte 24, 25 auf, die jeweils an eine der Leitungen 11, 12 der jeweiligen Codierungsleitung 10 angeschlossen sind. Auf diese Weise bestimmt das jeweilige Codierungselement 21 das von der jeweiligen Codierungsfassung 6 in Verbindung mit dem damit zusammenwirkenden Codierungssockel 15 erzeugbare bzw. übertragbare Codierungssignal. Beim Codierungselement 21 handelt es sich bevorzugt um ein elektrisches bzw. um ein elektronisches Bauteil. Gemäß einer besonders einfachen und preiswerten Ausführungsform kann es sich beim Codierungselement 21 um einen ohmschen Widerstand handeln. Im Einzelnen bildet somit das jeweilige Codierungselement 21 des jeweiligen Codierungssockels 15 die Codierung der jeweiligen Stablampe 3.

Gemäß Figur 2 werden die Fassungskontakte 24, 25 nur dann elektrisch miteinander verbunden, wenn der Codierungssockel 15 in die Codierungsfassung 6 ordnungsgemäß eingesetzt ist und die Sockelkontakte 22, 23 mit den Fassungskontakten 24, 25 elektrisch verbunden sind. Die elektrische Verbindung der Fassungskontakte 24, 25 und somit der damit verbundenen Leitungen 11, 12 erfolgt dabei über die Sockelkontakte 22 und 23 sowie durch das jeweilige Codierungselement 21 hindurch. Durch Einsetzen des Codierungssockels 15 in die Codierungsfassung 6 wird somit quasi eine Schleife geschlossen, die aus den beiden Leitungen 11, 12 der jeweiligen Codierungsleitung 10 und aus dem jeweiligen Codierungselement 21 besteht. Die Fassungskontakte 24, 25 und die Sockelkontakte 22, 23 bilden dabei eine elektrische Schnittstelle. Das Codierungselement 21 definiert damit eine Codierung der jeweiligen Stablampe 3. Die Codierungsfassung 6 und die Auswerteeinheit 19 bilden zusammen eine Codierungserkennung, die mit dem Steuergerät 4 zusammenwirkt bzw. zumindest teilweise darin integriert ist.

In den Figuren 3 und 4 sind die beiden Sockelkontakte 22, 23 des Codierungssockels 15 erkennbar. Ferner ist in Figur 3 das als Widerstand ausgestaltete Codierungselement 21 erkennbar. Gemäß einer vorteilhaften Ausführungsform kann gemäß den Figuren 3 und 4 vorgesehen sein, die beiden Sockelkontakte 22, 23 und das jeweilige Codierungselement 21 an einem Einsatzelement 26 anzuordnen, das bezüglich eines Sockelgehäuses 27 ein separates Bauteil repräsentiert und das in das Sockelgehäuse 27 eingesetzt ist. Beispielsweise kann hierbei eine Rastverbindung oder Clipsverbindung zwischen Einsatzelement 26 und Sockelgehäuse 27 vorgesehen sein, um das Einsatzelement 26 am Sockelgehäuse 27 zu fixieren.

Gemäß Figur 5 weist auch der Stromanschlusssockel 14 zwei elektrische Anschlusskontakte 28 auf, die mit dazu komplementären, hier nicht näher erläuterten Kontakten der jeweiligen Stromanschlussfassung 5 zusammenwirken. Auch hier kann ein Einsatzelement 29 vorgesehen sein, das die Anschlusskontakte 28 trägt und das in ein Sockelgehäuse 30 des Stromanschlusssockels 14 eingesetzt ist, diesbezüglich ein separates Bauteil bildet und damit insbesondere verrastet oder verclipst ist. Hierdurch ist es grundsätzlich möglich, einheitliche Sockelgehäuse 27, 30 zur Realisierung der Stromanschlusssockel 14 und der Codierungssockel 15 zu verwenden. Lediglich die eingesetzten Einsatzelemente 26, 29 unterscheiden sich. Durch diese Maßnahme wird die Anzahl an Gleichteilen erhöht, was die Herstellungskosten reduziert. Die Verwendung derartiger Einsatzelemente 26 mit den Sockelkontakten 22, 23 und dem Codierungselement 21 ermöglicht es ebenso, bei Verwendung der gleichen Sockelgehäuse 27 unterschiedlich codierte Codierungssockel 15 und somit unterschiedlich codierte Stablampen 3 preiswert zu realisieren.

Wie sich den Figuren 4 und 5 entnehmen lässt, können der Stromanschlusssockel 14 und der Codierungssockel 15 mechanisch verwechslungssicher ausgestaltet sein, sodass der Stromanschlusssockel 14 nur die jeweilige Stromanschlussfassung 5 eingesetzt werden kann. Erreicht wird dies beispielsweise dadurch, dass das jeweils verwendete Einsatzelement 26 bzw. 29 unterschiedliche Geometrien besitzen.

Zusätzlich oder alternativ kann vorgesehen sein, dass auch die jeweilige Stromanschlussfassung 5 und die jeweilige Codierungsfassung 6 mechanisch verwechslungssicher ausgestaltet sind, sodass nur ein passender Stromanschlusssockel 14 in die jeweilige Stromanschlussfassung 5 einsetzbar ist.

Bei der in Figur 1 gezeigten Ausführungsform, bei der wenigstens zwei Stablampen 3 in die Leuchte 2 einsetzbar sind, kann das Steuergerät 4 außerdem so konfiguriert sein, dass es sich dafür eignet, gleichzeitig zwei verschiedene Stablampen 3 zu betreiben. Die beiden Stablampen 3 können sich dabei durch einen unterschiedlichen Bedarf an Strom und/oder Spannung voneinander unterscheiden. Dabei kann das Steuergerät 4 in Verbindung mit der Codierungserkennung selbsttätig erkennen, welchen Strombedarf bzw. welchen Spannungsbedarf die jeweilige Stablampe 3 besitzt, sodass im Falle eines Austausches der codierten Stablampen 3 das Steuergerät 4 in Verbindung mit der Codierungserkennung automatisch die richtige Stromversorgung auswählt und zum Betreiben der jeweiligen Stablampe 3 verwendet. Bevorzugt ist jedoch eine einfachere Variante, bei welcher nur gleiche Stablampen 3 verwendet werden können. Das Steuergerät 4 kann dabei über die Codierung der Stablampen 3 erkennen, ob ordnungsgemäß gleiche Stablampen 3 eingesetzt sind oder nicht und abhängig davon die Stablampen 3 mit der richtigen Spannung und/oder mit dem richtigen Strom betreiben, wenn gleiche Stablampen 3 eingesetzt sind, oder die Stablampen 3 nicht oder nur mit reduzierter Stromversorgung betreiben und/oder eine Fehlermeldung generieren, wenn ungleiche Stablampen 3 eingesetzt sind.

## Patentansprüche

1. Stablampe zum austauschbaren Einsetzen in eine Leuchte (2), die für die jeweilige Stablampe (3) zwei voneinander beabstandete Fassungen (5, 6) zum Halten der eingesetzten Stablampe (3) aufweist, von denen die eine als Stromanschlussfassung (5) ausgestaltet ist, die zur Stromversorgung der eingesetzten Stablampe (3) dient, während die andere als Codierungsfassung (6) ausgestaltet ist, die zum Erzeugen und/oder Übertragen eines mit der eingesetzten Stablampe (3) korrelierten Codierungssignals an ein Steuergerät (4) zum Betreiben der eingesetzten Stablampe (3) dient, das abhängig vom Codierungssignal die für die eingesetzte Stablampe (3) passende Stromversorgung auswählt,
- wobei die Stablampe (3) einen stabförmigen Lampenkörper (13) aufweist, der wenigstens ein Leuchtmittel (31) aufweist,
- wobei die Stablampe (3) an dem einen Ende des Lampenkörpers (13) einen Stromanschlusssockel (14) zur Stromversorgung des jeweiligen Leuchtmittels (31) aufweist, der komplementär zur Stromanschlussfassung (5) ausgestaltet ist,
- wobei die Stablampe (3) an dem anderen Ende des Lampenkörpers (13) einen Codierungssockel (15) aufweist, der komplementär zur Codierungsfassung (6) ausgestaltet ist und der bei in die Leuchte (2) eingesetzter Stablampe (3) mit der Codierungsfassung (6) zum Erzeugen und/oder Übertragen des Codierungssignals zusammenwirkt,
- wobei wenigstens ein Codierungselement (21) vorgesehen ist, das mit elektrischen Sockelkontakten (22, 23) des Codierungssockels (15) elektrisch verbunden ist, die bei in die Leuchte (2) eingesetzter Stablampe (3) elektrisch mit elektrischen Fassungskontakten (24, 25) der Codierungsfassung (6) verbunden sind, wobei das Codierungselement (21) das erzeugbare und/oder übertragbare Codierungssignal bestimmt,
**dadurch gekennzeichnet,**
- **dass** der Codierungssockel (15) das wenigstens eine Codierungselement (21) aufweist,
- **dass** der Codierungssockel (15) ein Sockelgehäuse (27) aufweist, das die Sockelkontakte (22, 23) aufweist und das Codierungselement (21) enthält,
- **dass** die beiden Sockelkontakte (22, 23) und das jeweilige Codierungselement (21) an einem Einsatzelement (26) angeordnet sind, das bezüglich des Sockelgehäuses (27) ein separates Bauteil repräsentiert und das in das Sockelgehäuse (27) eingesetzt ist.

2. Stablampe nach Anspruch 1,
**dadurch gekennzeichnet,**
**dass** das jeweilige Codierungselement (21) ein elektrisches und/oder elektronisches Bauteil ist.

3. Stablampe nach Anspruch 1 oder 2,
**dadurch gekennzeichnet,**
**dass** das jeweilige Codierungselement (21) ein ohmscher Widerstand ist.

4. Stablampe nach einem der Ansprüche 1 bis 3,
**dadurch gekennzeichnet,**
**dass** bei in die Leuchte (2) eingesetzter Stablampe (3) die Fassungskontakte (24, 25) der Codierungsfassung (6) über die Sockelkontakte (22, 23) des Codierungssockels (15) durch das Codierungselement (21) hindurch elektrisch miteinander verbunden sind.

5. Stablampe nach einem der Ansprüche 1 bis 4,
**dadurch gekennzeichnet,**
**dass** der Anschlusssockel (14) und der Codierungssockel (15) mechanisch verwechslungssicher ausgestaltet sind, sodass der Anschlusssockel (14) nur in die jeweilige Anschlussfassung (5) passt.

6. Stablampe nach einem der Ansprüche 1 bis 5,
**dadurch gekennzeichnet,**
- **dass** das Einsatzelement (26) mittels einer Rastverbindung (28) oder Clipsverbindung am Sockelgehäuse (27) fixiert ist, und/oder
- **dass** das Einsatzelement (26) austauschbar am Sockelgehäuse (27) fixiert ist.

7. Stablampe nach einem der Ansprüche 1 bis 6,
**dadurch gekennzeichnet,**
**dass** die Stablampe (3) als stabförmige LED-Lampe ausgestaltet ist, die mehrere LEDs (31) als Leuchtmittel aufweist.

8. Leuchte
- mit wenigstens einer darin eingesetzten Stablampe (3) nach einem,der vorhergehenden Ansprüche,
- mit einem Steuergerät (4) zum Betreiben der jeweils eingesetzten Stablampe (3),
- mit einer Codierungserkennung (6, 19), die mit dem Steuergerät (4) gekoppelt und die bei eingesetzter Stablampe (3) mit einer Codierung der Stablampe (3) zusammenwirkt und abhängig von der Codierung der Stablampe (3) das Steuergerät (4) so ansteuert, dass das Steuergerät (4) die jeweilige Stablampe (3) mit einer dazu hinsichtlich Strom und/oder Spannung passenden Stromversorgung betreibt.

9. Leuchte
- mit wenigstens einer darin eingesetzten Stablampe (3) nach einem der Ansprüche 1 bis 7,
- mit einem Steuergerät (4) zum Betreiben der jeweils eingesetzten Stablampe (3),
- wobei die Leuchte (2) für jede darin einsetzbare Stablampe (3) zwei voneinander beabstandete Fassungen (5, 6) zum Halten der eingesetzten Stablampe (3) aufweist, wobei die eine Fassung als Stromanschlussfassung (5) ausgestaltet ist, die mit dem Steuergerät (4) elektrisch verbunden ist und zur Stromversorgung der eingesetzten Stablampe (3) dient,
- wobei die andere Fassung als Codierungsfassung (6) ausgestaltet ist, die mit dem Steuergerät (4) elektrisch verbunden ist und zum Erzeugen und/oder Übertragen eines mit der eingesetzten Stablampe (3) korrelierten Codierungssignals an das Steuergerät (4) dient,
- wobei das Steuergerät (4) so ausgestaltet und/oder programmiert ist, dass es zum Betreiben der jeweiligen Stablampe (3) abhängig vom Codierungssignal eine hinsichtlich Strom und/oder Spannung an die jeweilige Stablampe (3) angepasste Stromversorgung auswählt und durchführt.

10. Leuchte nach Anspruch 9,
**dadurch gekennzeichnet,**
- **dass** das Steuergerät (4) eine Codierungsleitung (10) aufweist, die zumindest einen ersten Leiter (11) und mindestens einen zweiten Leiter (12) aufweist,
- **dass** die jeweilige Codierungsfassung (6) einen mit dem ersten Leiter (11) der Codierungsleitung elektrisch verbundenen ersten Fassungskontakt (25) und einen mit dem zweiten Leiter (12) der Codierungsleitung (10) elektrisch verbundenen zweiten Fassungskontakt (25) aufweist,
- **dass** die Fassungskontakte (24, 25) erst bei eingesetzter Stablampe (3) durch einen mit der Codierungsfassung (6) zusammenwirkenden Codierungssockel (15) der Stablampe (3) elektrisch miteinander verbunden sind.

11. Leuchte nach Anspruch 9 oder 10,
**dadurch gekennzeichnet,**
**dass** die jeweilige Stromanschlussfassung (5) und die jeweilige Codierungsfassung (6) mechanisch verwechslungssicher ausgestaltet sind, sodass nur ein passender Stromanschlusssockel (14) der Stablampe (3) in die Stromanschlussfassung (5) passt.

12. Leuchte nach einem der Ansprüche 9 bis 11,
**dadurch gekennzeichnet,**
- **dass** die Leuchte (2) zum Einsetzen von wenigstens zwei Stablampen (3) vorgesehen ist, die hinsichtlich ihrer Stromversorgung unterschiedlich sein können,
- **dass** das Steuergerät (4) so ausgestaltet und/oder programmiert ist, dass es die wenigstens zwei Stablampen (3) individuell mit der jeweils passenden Stromversorgung betreiben kann.

## Claims

1. Tubular lamp for exchangeable insertion into a luminaire (2) which has, for the respective tubular lamp (3), two sockets (5, 6) at a distance from each other for holding the inserted tubular lamp (3), of which the one is designed as a power connection socket (5) which serves for the power supply of the inserted tubular lamp (3), whilst the other is designed as a coding socket (6) which serves to generate and/or transfer a coding signal correlated with the inserted tubular lamp (3) to a control device (4) for operating the inserted tubular lamp (3), said control device selecting the power supply appropriate for the inserted tubular lamp (3) depending on the coding signal,
- wherein the tubular lamp (3) has a tubular lamp body (13) which has at least one light source (31),
- wherein, at the one end of the lamp body (13), the tubular lamp (3) has a power connection base (14) for the power supply of the respective light source (31), said power connection base being designed to be complementary to the power connection socket (5),
- wherein, at the other end of the lamp body (13), the tubular lamp (3) has a coding base (15), which is designed to be complementary to the coding socket (6) and which interacts with the coding socket (6) to generate and/or transfer the coding signal when a tubular lamp (3) is inserted into the luminaire (2),
- wherein at least one coding element (21) is provided which is electrically connected to electrical base contacts (22, 23) of the coding base (15), said base contacts being electrically connected to electrical socket contacts (24, 25) of the coding socket (6) when a tubular lamp (3) is inserted into the luminaire (2), wherein the coding element (21) determines the generatable and/or transferable coding signal,
**characterised in that**
- the coding base (15) has the at least one coding element (21),
- the coding base (15) has a base housing (27) which has the base contacts (22, 23) and contains the coding element (21)
- the two base contacts (22, 23) and the respective coding element (21) are arranged on the insert element (26) which represents a separate component with regard to the base housing (27) and which is inserted into the base housing (27).

2. Tubular lamp according to claim 1,
**characterised in that**
the respective coding element (21) is an electrical and/or electronic component.

3. Tubular lamp according to claim 1 or 2,
**characterised in that**
the respective coding element (21) is an ohmic resistor.

4. Tubular lamp according to one of claims 1 to 3,
**characterised in that**
the socket contacts (24, 25) of the coding socket (6) are electrically connected to each other through the coding element (21) via the base contacts (22, 23) of the coding base (15) when a tubular lamp (3) is inserted into the luminaire (2).

5. Tubular lamp according to one of claims 1 to 4,
**characterised in that**
the connection base (14) and the coding base (15) are designed to be mechanically non-interchangeable such that the connection base (14) only fits into the respective connection socket (5).

6. Tubular lamp according to one of claims 1 to 5,
**characterised in that**
- the insert element (26) is fixed to the base housing (27) by means of a latching connection (28) or clip-on connection, and/or
- the insert element (26) is fixed to the base housing (27) to be exchangeable.

7. Tubular lamp according to one of claims 1 to 6,
**characterised in that**
the tubular lamp (3) is designed as a tubular LED lamp which has several LEDs (31) as light sources.

8. Luminaire,
- having at least one tubular lamp (3) according to one of the preceding claims inserted therein,
- having a control device (4) for operating the respectively inserted tubular lamp (3),
- having a coding detection (6, 19), which is coupled to the control device (4) and which interacts with a coding of the tubular lamp (3) when a tubular lamp (3) is inserted, and controls the control device (4) depending on the coding of the tubular lamp (3) such that the control device (4) operates the respective tubular lamp (3) with a power supply appropriate for this with regard to current and/or voltage.

9. Luminaire,
- having at least one tubular lamp (3) according to one of claims 1 to 7 inserted therein,
- having a control device (4) for operating the respectively inserted tubular lamp (3),
- wherein the luminaire (2) has, for each tubular lamp (3) able to be inserted therein, two sockets (5, 6) at a distance to each other for holding the inserted tubular lamp (3), wherein the one socket is designed as a power connection socket (5) which is electrically connected to the control device (4) and serves for the power supply of the inserted tubular lamp (3),
- wherein the other socket is designed as a coding socket (6) which is electrically connected to the control device (4) and serves to generate and/or transfer a coding signal correlated with the inserted tubular lamp (3) to the control device (4),
- wherein the control device (4) is designed and/or programmed such that, to operate the respective tubular lamp (3), it selects and implements a power supply adapted to the respective tubular lamp (3) with regard to current and/or voltage depending on the coding signal.

10. Luminaire according to claim 9,
**characterised in that**
- the control device (4) has a coding line (10) which has at least one first conductor (11) and at least one second conductor (12),
- the respective coding socket (6) has a first socket contact (25) electrically connected to the first conductor (11) of the coding line and a second socket contact (25) electrically connected to the second conductor (12) of the coding line (10),
- the socket contacts (24, 25) are electrically connected to each other only when the tubular lamp (3) is inserted, due to a coding base (15) of the tubular lamp (3) interacting with the coding socket (6).

11. Luminaire according to claim 9 or 10,
**characterised in that**
the respective power connection socket (5) and the respective coding socket (6) are designed to be mechanically non-interchangeable such that only an appropriate power connection base (14) of the tubular lamp (3) fits into the power connection socket (5).

12. Luminaire according to one of claims 9 to 11,
**characterised in that**,
- the luminaire (2) is provided for the insertion of at least two tubular lamps (3) which can be different with regard to their power supply,
- the control device (4) is designed and/or programmed such that it can operate the at least two tubular lamps (3) individually with the respectively appropriate power supply.

## Revendications

1. Lampe tubulaire pour l'insertion remplaçable dans un luminaire (2), qui présente deux douilles (5, 6) espacées l'une de l'autre pour la lampe tubulaire (3) respective pour le maintien de la lampe tubulaire insérée (3), desquelles l'une est conçue en tant que douille de raccordement électrique (5), qui sert à l'alimentation électrique de la lampe tubulaire insérée (3), tandis que l'autre est conçue en tant que douille de codage (6), qui sert à générer et/ou à transmettre un signal de codage corrélé avec la lampe tubulaire insérée (3) à un appareil de commande (4) pour le fonctionnement de la lampe tubulaire insérée (3), qui choisit l'alimentation électrique adaptée pour la lampe tubulaire insérée (3) en fonction du signal de codage,
- dans laquelle la lampe tubulaire (3) présente un corps de lampe tubulaire (13), qui présente au moins un moyen d'éclairage (31),
- dans laquelle la lampe tubulaire (3) présente à l'une extrémité du corps de lampe (13) un culot de raccordement électrique (14) pour l'alimentation électrique du moyen d'éclairage (31) respectif, qui est conçu de manière complémentaire à la douille de raccordement électrique (5),
- dans laquelle la lampe tubulaire (3) présente à l'autre extrémité du corps de lampe (13) un culot de codage (15), qui est conçu de manière complémentaire à la douille de codage (6) et qui, lorsque la lampe tubulaire (3) est insérée dans le luminaire (2), coopère avec la douille de codage (6) pour générer et/ou transmettre le signal de codage,
- dans laquelle au moins un élément de codage (21) est prévu, qui est relié électriquement aux contacts de culot électriques (22, 23) du culot de codage (15), qui, lorsque la lampe tubulaire (3) est insérée dans le luminaire (2), sont reliés électriquement aux contacts de douille électriques (24, 25) de la douille de codage (6), dans laquelle l'élément de codage (21) détermine le signal de codage pouvant être généré et/ou transmis,
**caractérisée en ce**
- **que** le culot de codage (15) présente l'au moins un élément de codage (21),
- **que** le culot de codage (15) présente un boîtier de culot (27), qui présente les contacts de culot (22, 23) et contient l'élément de codage (21),
- **que** les deux contacts de culot (22, 23) et l'élément de codage (21) respectif sont agencés au niveau d'un élément d'insertion (26), qui représente un composant séparé par rapport au boîtier de culot (27) et qui est inséré dans le boîtier de culot (27).

2. Lampe tubulaire selon la revendication 1,
**caractérisée en ce**
**que** l'élément de codage (21) respectif est un composant électrique et/ou électronique.

3. Lampe tubulaire selon la revendication 1 ou 2,
**caractérisée en ce**
**que** l'élément de codage (21) respectif est une résistance ohmique.

4. Lampe tubulaire selon l'une quelconque des revendications 1 à 3,
**caractérisée en ce**
**que** lorsque la lampe tubulaire (3) est insérée dans le luminaire (2), les contacts de douille (24, 25) de la douille de codage (6) sont reliés électriquement l'un à l'autre à travers l'élément de codage (21) par le biais des contacts de culot (22, 23) du culot de codage (15).

5. Lampe tubulaire selon l'une quelconque des revendications 1 à 4,
**caractérisée en ce**
**que** le culot de raccordement (14) et le culot de codage (15) sont conçus mécaniquement pour ne pas être intervertis, si bien que le culot de raccordement (14) ne s'ajuste que dans la douille de raccordement (5) respective.

6. Lampe tubulaire selon l'une quelconque des revendications 1 à 5,
**caractérisée en ce**
- **que** l'élément d'insertion (26) est fixé au niveau du boîtier de culot (27) au moyen d'une liaison d'encliquetage (28) ou d'une liaison à clips, et/ou
- **que** l'élément d'insertion (26) est fixé au niveau du boîtier de culot (27) de manière remplaçable.

7. Lampe tubulaire selon l'une quelconque des revendications 1 à 6,
**caractérisée en ce**
**que** la lampe tubulaire (3) est conçue en tant que lampe LED tubulaire, qui présente plusieurs LED (31) en tant que moyen d'éclairage.

8. Luminaire
- avec au moins une lampe tubulaire (3) qui y est insérée selon l'une quelconque des revendications précédentes,
- avec un appareil de commande (4) pour le fonctionnement de la lampe tubulaire (3) respectivement insérée,
- avec une détection de codage (6, 19), qui est couplée à l'appareil de commande (4) et qui, lorsque la lampe tubulaire (3) est insérée, coopère avec un codage de la lampe tubulaire (3) et commande l'appareil de commande (4) en fonction du codage de la lampe tubulaire (3) de telle sorte que l'appareil de commande (4) fait fonctionner la lampe tubulaire (3) respective avec une alimentation électrique adaptée à cet égard en termes de courant et/ou de tension.

9. Luminaire
- avec au moins une lampe tubulaire (3) qui y est insérée selon l'une quelconque des revendications 1 à 7,
- avec un appareil de commande (4) pour le fonctionnement de la lampe tubulaire (3) respectivement insérée,
- dans lequel le luminaire (2) présente pour chaque lampe tubulaire (3) pouvant y être insérée, deux douilles (5, 6) espacées l'une de l'autre pour le maintien de la lampe tubulaire insérée (3), dans lequel l'une douille est conçue en tant que douille de raccordement électrique (5), qui est reliée électriquement à l'appareil de commande (4) et sert à l'alimentation électrique de la lampe tubulaire insérée (3),
- dans lequel l'autre douille est conçue en tant que douille de codage (6), qui est reliée électriquement à l'appareil de commande (4) et sert à générer et/ou à transmettre un signal de codage corrélé avec la lampe tubulaire insérée (3) à l'appareil de commande (4),
- dans lequel l'appareil de commande (4) est conçu et/ou programmé de telle sorte qu'il choisit et réalise pour le fonctionnement de lampe tubulaire (3) respective, une alimentation électrique adaptée à la lampe tubulaire (3) respective en termes de courant et/ou de tension en fonction du signal de codage.

10. Luminaire selon la revendication 9
**caractérisé en ce**
- **que** l'appareil de commande (4) présente une ligne de codage (10), qui présente au moins un premier conducteur (11) et au moins un deuxième conducteur (12),
- **que** la douille de codage (6) respective présente un premier contact de douille (25) relié électriquement au premier conducteur (11) de la ligne de codage et un deuxième contact de douille (25) relié électriquement au deuxième conducteur (12) de la ligne de codage (10),
- **que** les contacts de douille (24, 25) ne sont reliés électriquement l'un à l'autre que lorsque la lampe tubulaire (3) est insérée par un culot de codage (15) de la lampe tubulaire (3) coopérant avec la douille de codage (6).

11. Luminaire selon la revendication 9 ou 10,
**caractérisé en ce**
**que** la douille de raccordement électrique (5) respective et la douille de codage (6) respective sont conçues mécaniquement pour ne pas être interverties, si bien qu'un culot de raccordement électrique (14) adapté de la lampe tubulaire (3) ne s'ajuste que dans la douille de raccordement électrique (5).

12. Luminaire selon l'une quelconque des revendications 9 à 11,
**caractérisé en ce**
- **que** le luminaire (2) est prévu pour l'insertion d'au moins deux lampes tubulaires (3), qui peuvent être différentes en termes de leur alimentation électrique,
- **que** l'appareil de commande (4) est conçu et/ou programmé de telle sorte qu'il peut faire fonctionner les au moins deux lampes tubulaires (3) individuellement avec l'alimentation électrique respectivement adaptée.
